# EUROPEAN PATENT SPECIFICATION

(11) **EP 0 655 129 B1**
(45) Date of publication and mention of the grant of the patent: **13.05.1998**
(21) Application number: 93920080.4
(22) Date of filing: 13.08.1993
(51) Int. Cl.: G01J 3/12, G02B 5/28

(54) **ROTATING FLEXIBLE FILTER SPECTROMETER**
SPEKTROMETER MIT DREHBAREM BIEGSAMEM FILTER
SPECTROMETRE AYANT UN FILTRE FLEXIBLE ROTATIF

(30) Priority: 14.08.1992 US 931029
(43) Date of publication of application: 31.05.1995
(73) Proprietor: BLAIS, John, F.,Jr., Framingham, MA 01701 (US)
(72) Inventor: BLAIS, John, F.,Jr., Framingham, MA 01701 (US)
(74) Representative: Holdcroft, James Gerald, Dr.
(86) International application number: US9307677
(87) International publication number: WO9404893

(56) References cited:
- DE-A- 3 406 175
- DE-A- 3 942 375
- US-A- 4 082 464
- US-A- 4 084 909
- US-A- 4 822 998
- US-A- 4 957 371
- PATENT ABSTRACTS OF JAPAN vol. 13, no. 203 (P-870)15 May 1989 & JP,A,01 024 202 (BROTHER IND) 26 January 1989

## Description

### Background of the Invention

The invention relates generally to spectrometers, and more specifically relates to spectrometers having a flexible filter mounted within a rotating cylinder. Older spectrometer designs use prisms or gratings as the spectral dispersing elements. These designs are compromised by the mechanical sensitivity of the dispersing element. To minimize this sensitivity, the mass and size of the spectrometer is increased, adversely impacting the portability of the design. Another type of spectrometer, the interferometer, has problems due to the requirement of precision moving parts, severe signal processing constraints, and non-simultaneous wavelength measurement.

Designs using variable filters are relatively new. Variable filters are coated with a sequence of high index and low index of refraction layers. The coatings vary linearly along the length or circumference of the filter. They are typically more compact in design, increasing portability. Two main filter shapes are currently used, circular and linear. Circular variable wedge filters (i.e. disk-like filters) are wasteful because they needlessly coat area which is not used in the final filter. This needlessly wastes material and increases the cost of the system. Linear variable wedge filters are more efficient in their use of coating area. Yet systems employing either of these filter designs are limited in the filter's available range and the accuracy of the actuator that moves the filter relative to the incident light beam.

The present invention overcomes the shortcomings of previous designs by using a novel physical layout for the variable filters. A unique property of the invention is the use of rectangular variable filters which flex into an arcuate shape. One or more filters may then be mounted within the circumference of a cylinder. Cylindrically mounted filters allow the use of simple fixed focusing optics. In using this layout, the invention can achieve a fast and accurate scan, while retaining a wide scanning range in a small package.

US-A-4,082,464 discloses an optical analysis system having rotating filters in which six interference filters are mounted on a wheel on a cylindrical locus. The wheel rotates to move the filters in sequence through a beam of light and to vary the angle of incidence of the light to the filters as the filters move through the beam of light so that the wavelength passed by the filters is swept through a range of values. The intensity of light reflected from or transmitted through a test sample is detected to provide an indication of the reflective or transmissive optical density of the test sample at specific wavelengths. The angular position of each of the filters on the wheel is adjustable to make the range of light wavelengths transmitted by each filter adjustable.

Patent Abstracts of Japan vol 13, No. 203(p-870) published 15.05.89 discloses a colour separation device according to the preamble of claim 1 said to be constituted as follows.

On the transmission plane of an interference filter, the interference film which passes the transmission light of a narrow band by utilizing the interference of light is fixed, and the film thickness of the interference film is varied consecutively extending over the longitudinal direction of a transmission plane so as to set the different wavelength bands of the transmission light in order. And in the interference filter, the optical sensor to detect the transmission light is provided by fixing its position. Furthermore, the cylindrical interference filter is fixed on a rotary table connected directly to a motor, and is constituted so that it can be driven rotatably around an axis.

The present invention is characterised by the features of the characterising portion of claim 1.

### Summary of the Invention

The spectrometer is comprised of an aperture, beam splitting dichroics to select and reflect spectral regions of interest, beam shaping optics to form the image of the aperture onto a rotating filter cylinder, variable filter cylinders, and detectors to detect the presence of the filtered light.

The beam splitter may be a dichroic beam splitter composed of materials such as germanium, silicon, sapphire or fused quartz. Alternatively, the beam splitter may be composed of a half silvered first surface mirror which partially reflect an incident beam of radiation.

The filter cylinder is composed of one or more flexible variable filters mounted within the circumference of a cylinder. Mounting is accomplished by flexing a planar filter into an arcuate shape and then fitting the filter into a curved slot in the cylindrical frame. The arcuately flexed filters are held into position by a frame curved to match the arcuate shape of the cylinder. Each cylindrical filter frame has a tongue and groove so the multiple cylinders may be stacked and joined to one another.

The flexible variable filter is composed of layers of high (H) index of refraction and low (L) index of refraction material coated onto a flexible substrate. Individual layers of H and L material overlay one another in a specific sequence, for example (H,L)⁹ L,L (H,L)⁹ where the index of H=2.2 and L=1.37. The flexible substrate is .002 inches thick or less and composed of a material such as germanium, silicon, or sapphire. The H and L layers are deposited onto the flexible substrate using deposition process such as that taught by U.S. Pat. No. 4,957,371 issued to Pellicori et al., although other deposition processes may be used, as will be appreciated by those skilled in the art.

The rotating frame is comprised of one or more variable filter cylinders mounted on an angular position encoder. During operation the cylinders are rotated, allowing different regions of the flexible filters to pass between the focusing optics and the spectral detector and allowing a range of different wavelengths to be scanned by the detector. By using different filter cylinders in a stacked configuration, a wider variety of wavelength ranges may be scanned by the detector.

Multiple sets of beam splitters, focusing optics and detectors may also be mounted in conjunction with multiple cylinder to allow the simultaneous scanning of multiple wavelength ranges for each cylinder. This arrangement would also decrease the scan time for the spectrometer.

A unique characteristic of this invention is its capability of scanning the entire spectrum from the ultraviolet (.2um) to the far infrared (50um) in one scan and in a short time. For example, if the filter cylinders can be rotated 20 times a second, 20 scans can be performed each second using a single detector for each cylinder.

### Description of the Preferred Embodiment

### Drawings

Fig. 1 is a perspective view of the flexible filter spectrometer of the invention with three filter cylinders mounted.

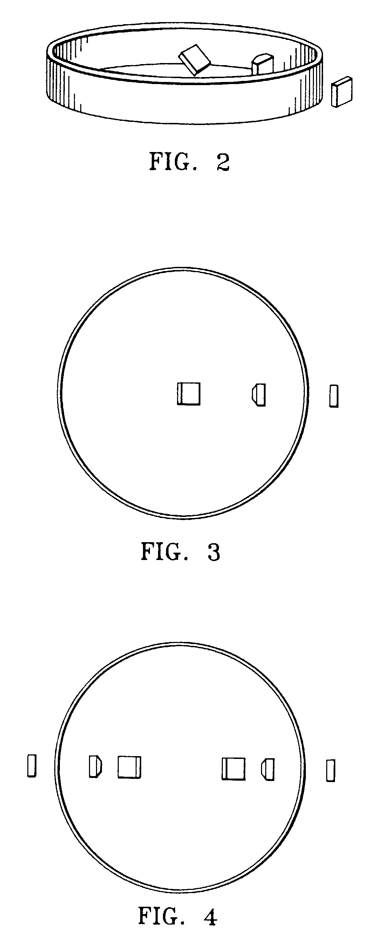

Fig. 2 is a perspective view of a filter cylinder.

Fig. 3 is a top view of a filter cylinder with one beam splitter.

Fig. 4 is a top view of a filter cylinder with two beam splitters.

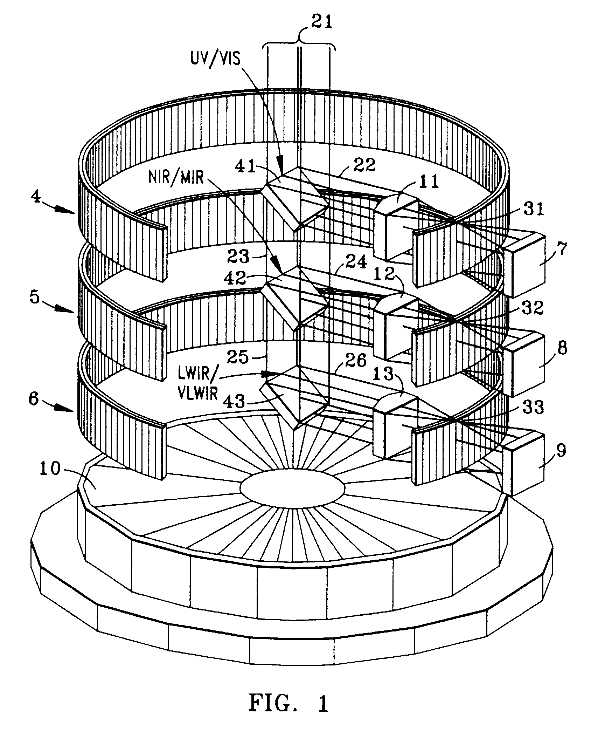

In the preferred embodiment of Fig. 1, an incoming radiation beam 21 strikes a dichroic beam splitter 41. A portion of the radiation beam 21 is reflected to create a radiation beam 22, with the rest of the radiation beam 21 passing through a beam splitter 41 to create a radiation beam 23. The radiation beam 22 passes through a beam-shaping optics element 11, focusing the beam onto a variable filter 31. The variable filter 31 is designed to selectively pass radiation of a desired wavelength to a detector 7. When radiation falls upon the detector 7, a signal is generated which represents the wavelength and intensity of the radiation beam 22. As the cylinder is rotated, a different wavelength is filtered and detected at each different filter position interposed between the beam-shaping optics element 11 and the detector 7.

The radiation beam 23 passed by the dichroic beam splitter 41 travels to a dichroic beam splitter 42. A portion of the radiation beam 23 is reflected to create a radiation beam 24, with the rest of the radiation beam 23 passing through the beam splitter 42 creating a radiation beam 25. The radiation beam 24 passes through a beam-shaping optics element 12, focusing the beam onto a variable filter 32, which is designed to selectively pass radiation of a desired wavelength to a detector 8. When radiation falls upon the detector 8, a signal is generated to represent the wavelength and intensity of the radiation beam 24. As the cylinder rotates, different filter positions are interposed between the beam shaping optics 12 and the detector 8 so that different wavelengths are filtered and detected.

The remaining radiation beam 25 passes to a dichroic beam splitter 43. As shown, a portion of the radiation beam 25 will be reflected to a beam shaping optics element 13, passing through a filter 33 and onto a detector 9. The detector generates a signal when radiation passes through the filter 33. Again, this signal represents the presence of wavelengths corresponding to the filter 33.

As can be seen, the detectors 7, 8, and 9 will simultaneously measure the radiation beams passing through the filters 31, 32, and 33, respectively. The filters are mounted in a cylinder, with the filters 31, 32, and 33 each respectively residing in the separate cylinders 4, 5, and 6. Each cylinder is composed of at least one variable filter mounted on the circumference of the cylinder. Additional flexible variable filters may be added to increase the range or resolution of the cylinder. The cylinders 4, 5, and 6 are mounted on a base that rotates relative to the beam splitters 41, 42, and 43, the beam shaping optics 11, 12, and 13, and the detectors 7, 8, and 9. As the cylinders rotate, different regions of the filters are brought between the beam shaping optics 11, 12, and 13, and their respective detectors 7, 8, and 9. This arrangement allows the simultaneous detection of three sets of wavelengths.

Each cylinder may filter at different ranges of wavelengths. For example, in the preferred embodiment, the cylinder 4 is a wide band detector, the cylinder 5 is a very wide band detector and the cylinder 6 is a narrow band detector. Those trained in the art can appreciate that an appropriate combination of cylinders may be chosen to produce a continuous spectrum from .2um to 50um.

The cylinders 4, 5, and 6 rotate once every 50ms so that 20 scans of all filters can be performed every second. While the cylinders rotate, an angular encoder 10 signals the angular position of the cylinder. This position information is used to indicate which section of filter cylinder is presently in operation. This angular position encoder is accurate to within 0.1%.

The use of filter cylinders allows the spectrometer to be smaller and to occupy less space than conventional spectrometers now available. The spectrometer's small size also improves its mechanical stability and enables portability of the spectrometer.

The invention is designed to be modular, with a variety of configurations. With a unit defined as a beam splitter, beam-focusing optic element, filter cylinder and detector, the simplest configuration contains one unit, while additional units may be added to expand the spectrometer's capabilities as needed. These additional units may extend the range or increase the resolution of the invention.

For example, a spectrometer may be composed of a single unit with filters covering wavelengths of.4um to .7um. Alternatively, a spectrometer may be composed of three units, with the first cylinder covering the range from .2um to *x*, the second unit covering the range from *x* to *y* and the third unit covering the range from *y* to 50um. As one skilled in the art can see, various configurations are possible. In addition, each unit may cover only portions of a single range.

In another embodiment, a unit may contain multiple beam splitters mounted within the circumference of the cylindrical filter. Adding more focusing optics and detectors makes a shorter scanning period possible. This embodiment also increases the number of wavelengths which can be simultaneously detected.

## Claims

1. An incident beam filtering apparatus comprising:
a filter cylinder (4) suitable for rotation about an axis thereof; characterised by
at least one flexible arcuate filter (31) having a radius of curvature disposed on a surface of the filter cylinder (4);
a means for receiving an incident beam (21) within the filter cylinder from a direction parallel to the axis of the filter cylinder (4);
a redirecting means (41) for redirecting a portion of the incident beam (21) toward said filter (31); and
a means for focusing said redirected portion (22) of the incident beam onto said filter (31).

2. The apparatus of claim 1 wherein said means (41) for redirecting the incident beam (21) is a dichroic beam splitter.

3. The apparatus of claim 1 wherein said means (41) for redirecting the incident beam (21) is a partially reflective first surface mirror.

4. The apparatus of claim 1, 2 or 3 further comprising:
a means for detecting passage (7) of said redirected portion (22) through said filter (31).

5. The apparatus of any preceding claim wherein the curve of the filters (31) match that of the filter cylinder (4).

6. The apparatus of claim 5, wherein the beam shaping means (11) focuses the redirected portion of the incident beam (21) along a line substantially perpendicular to the axis of the filter cylinder (4).

7. The apparatus of any preceding claim further comprising a means for rotating said filter cylinder.

8. The apparatus of claim 7 further comprising an angular position detection means (10) for determining the rotational position of the cylinder.

## Patentansprüche

1. Einfallsstrahl-Filterungsvorrichtung mit:
einem Filterzylinder (4), der für eine Rotation um seine Achse geeignet ist; gekennzeichnet durch:
mindestens ein flexibles gekrümmtes Filter (31) mit einem Krümmungsradius, das auf einer Oberfläche des Filterzylinders (4) angeordnet ist;
eine Einrichtung für den Empfang eines Einfallsstrahls (21) innerhalb des Filterzylinders aus einer Richtung parallel zu der Achse des Filterzylinders (4);
eine Rückführungseinrichtung (41) zum Zurückführen eines Teils des Einfallsstrahls (21) zu dem Filter (31); und
eine Einrichtung zum Fokussieren des zurückgeführten Teils (22) des Einfallsstrahls auf das Filter (31).

2. Vorrichtung nach Anspruch 1, wobei die Einrichtung (41) zum Zurückführen des Einfallsstrahls (21) ein dichroitischer Strahlteiler ist.

3. Vorrichtung nach Anspruch 1, wobei die Einrichtung (41) zum Zurückführen des Einfallsstrahls (21) ein teilreflektiver erster Oberflächenspiegel ist.

4. Vorrichtung nach Anspruch 1, 2 oder 3, ferner mit:
einer Einrichtung für die Detektion des Durchtritts (7) des zurückgeführten Anteils (22) durch das Filter (31).

5. Vorrichtung nach einem der vorstehenden Ansprüche, wobei die Krümmung der Filter (31) mit der des Filterzylinders übereinstimmt.

6. Vorrichtung nach Anspruch 5, wobei die Strahlformungseinrichtung (11) den zurückgeführten Teil des Einfallsstrahls (21) entlang einer Linie fokussiert, die im wesentlichen senkrecht zu der Achse des Filterzylinders (4) verläuft.

7. Vorrichtung nach einem der vorstehenden Ansprüche, welche ferner eine Einrichtung zum Drehen des Filterzylinders aufweist.

8. Vorrichtung nach Anspruch 7, welche ferner eine Winkelposition-Detektionseinrichtung (10) für die Ermittlung der Rotationsposition des Zylinders aufweist.

## Revendications

1. Appareil de filtrage d'un faisceau incident, comprenant :
un cylindre à filtre (4) adapté pour tourner autour d'un axe du cylindre; caractérisé par
au moins un filtre souple (31) de forme arquée ayant un rayon de courbure et disposé sur une surface du cylindre à filtre (4);
un moyen, à l'intérieur du cylindre à filtre, pour recevoir un faisceau incident (21) à partir d'une direction parallèle à l'axe du cylindre à filtre (4);
un moyen de déflexion (41) pour défléchir une partie du faisceau incident (21) vers ledit filtre (31); et
un moyen pour focaliser ladite partie défléchie (22) du faisceau incident sur ledit filtre (31).

2. Appareil suivant la revendication 1, dans lequel ledit moyen (41) pour défléchir le faisceau incident (21) est un fractionneur de faisceau dichroïque.

3. Appareil suivant la revendication 1, dans lequel ledit moyen (41) pour défléchir le faisceau incident (21) est un miroir ayant une première surface partiellement réfléchissante.

4. Appareil suivant la revendication 1, 2 ou 3, comprenant en cutre :
un moyen pour détecter le passage (7) de ladite partie défléchie (22) à travers ledit filtre (31).

5. Appareil suivant l'une quelconque des revendications précédentes, dans lequel la courbure des filtres (31) correspond à celle du cylindre à filtre (4).

6. Appareil suivant la revendication 5, dans lequel le moyen de mise en forme de faisceau (11) focalise la partie défléchie du faisceau incident (21) le long d'une ligne sensiblement perpendiculaire à l'axe du cylindre à filtre (4).

7. Appareil suivant l'une quelconque des revendications précédentes, comprenant en outre un moyen pour faire tourner ledit cylindre à filtre.

8. Appareil suivant la revendication 7, comprenant en outre un moyen de détection de position angulaire (10) pour déterminer la position en rotation du cylindre.
